# FASCICULE DE BREVET EUROPEEN

(11) **EP 3 355 665 B1**
(45) Date de publication et mention de la délivrance du brevet: **23.09.2020**
(21) Numéro de dépôt: 18153030.4
(22) Date de dépôt: 23.01.2018
(51) Int. Cl.: B60Q 1/14, H05B 45/10, H05B 47/18

(54) **DISPOSITIF DE PILOTAGE DE SOURCES LUMINEUSES D'UN VÉHICULE AUTOMOBILE**
STEUERVORRICHTUNG FÜR LEUCHTQUELLEN EINES KRAFTFAHRZEUGS
DEVICE FOR CONTROLLING LIGHT SOURCES OF A MOTOR VEHICLE

(30) Priorité: 26.01.2017 FR 1750635
(43) Date de publication de la demande: 01.08.2018
(73) Titulaire: Valeo Vision, 93012 Bobigny Cedex (FR)
(72) Inventeur: DARI, Alain, 93012 BOBIGNY Cedex (FR)
(74) Mandataire: Valeo Vision

(56) Documents cités:
- DE-A1-102008 062 640
- US-A1- 2014 091 731

## Description

L'invention a trait au domaine des projecteurs d'éclairage, notamment pour véhicule automobile. L'invention concerne en particulier un module lumineux pour un tel projecteur, le module étant équipé de sources lumineuses à élément semi-conducteur, dont la mise à disposition d'une information de BIN est nécessaire pour la configuration du projecteur.

Une diode électroluminescente, LED, est un composant électronique capable d'émettre de la lumière lorsqu'il est parcouru par un courant électrique. L'intensité lumineuse émise par une LED est en général dépendante de l'intensité du courant électrique qui la traverse. Entre autres, une LED est caractérisée par une valeur seuil de tension d'alimentation directe (« forward voltage »). Le courant direct (« forward current ») qui en résulte est en général décroissant à température croissante. De même, lorsqu'une LED émet de la lumière, on observe à ses bornes une chute de tension égale à sa tension directe. Dans le domaine automobile, on a de plus en plus recours à la technologie LED pour diverses solutions de signalisation lumineuse. Les LEDs sont utilisées afin d'assurer des fonctions lumineuses telles que les feux diurnes, les feux de signalisation etc... Les composants LEDs issus d'un même procédé de production peuvent néanmoins présenter des caractéristiques (capacité d'émission, tension directe, ...) différentes. Afin de regrouper les composants ayant des caractéristiques semblables, les LEDs produites sont triées par groupes, appelés également BIN, chaque BIN regroupant des LEDs ayant des caractéristiques semblables.

Il est connu dans l'art d'utiliser un circuit de pilotage pour piloter l'alimentation d'un ensemble ou groupe de LEDs. Le circuit définit la tension appliquée à une branche montée en charge et comprenant le groupe de LEDs branchées en série. Dans le domaine des dispositifs lumineux pour véhicules automobiles, il est particulièrement important de pouvoir assurer une luminosité constante afin de garantir la sécurité des utilisateurs du véhicule et des acteurs du trafic routier. Afin de fournir une alimentation constante, des circuits de pilotage connus utilisent différents types de convertisseurs, DC/DC, linéaire, résistif, etc, ... pour convertir la tension continue fournie par exemple par une batterie de voiture en une tension continue de charge, dépendante du nombre de LEDs alimentées. Le courant électrique à fournir dépend également du BIN des LEDs à alimenter. C'est pourquoi il est, selon des procédés d'assemblages connus, nécessaire d'obtenir l'information de BIN qui correspond aux LEDs utilisées, pour programmer ou régler correctement le circuit de pilotage utilisé pour alimenter les LEDs en courant électrique. De manière connue, l'information de BIN est codée à l'aide d'une résistance d'une valeur prédéterminée, disposée sur le circuit imprimé qui supporte les LEDs en question, en isolation de la branche de charge qui regroupe les sources lumineuses. Le circuit de pilotage de l'alimentation de ces LEDs est connecté par des fils de connexion dédiés au circuit imprimé supportant les LEDs pour obtenir la valeur de la résistance en question, et pour en déduire l'information de BIN. Avec le nombre de fonctions lumineuses croissant implémentées par des LEDs, le nombre de câbles de connexion reliant le/les circuits de pilotage de l'alimentation aux circuits imprimés supportant les LEDs en question s'accroît donc rapidement dans le but de relayer les informations BIN de manière requise. Ceci engendre d'une part des coûts importants lors de la production de projecteurs pour véhicules automobiles, et d'autre part des contraintes de conception importantes, puisque l'espace limité dans lequel tous les modules d'un dispositif lumineux doivent être logés se voit restreint par ce câblage.

Une solution à ce problème consiste dans l'élimination des connexions dédiées à la lecture des informations BIN dans la suppression des résistances qui encodent les informations de BIN. Ceci résulte en un gain d'espace intéressant et désirable au sein d'un projecteur d'un véhicule automobile. Lors de l'assemblage d'un tel projecteur, les valeurs de BIN des diodes électroluminescentes qui seront installées dans le projecteur sont programmées au sein du dispositif de pilotage, qui est dès lors adapté à fournir à toutes les LEDs du projecteur un courant électrique d'intensité appropriée. Il se pose néanmoins un problème de maintenance, puisque, lors du remplacement du dispositif de pilotage, l'information de BIN n'est plus disponible.

DE102008062640 A1 divulgue un ensemble de projecteurs de véhicule, chacun comprenant un élément de mémoire contenant des données relatives à l'intensité du courant à fournir aux sources lumineuses desdits projecteurs.

L'invention a pour objectif de pallier au moins un des problèmes posés par l'art antérieur. Plus précisément, l'invention a pour objectif de proposer un dispositif de pilotage de l'alimentation électrique de sources lumineuses d'un ensemble, qui ne nécessite pas de connexions dédiées à la récupération de l'information BIN de chacune des sources lumineuses. En même temps, la maintenance d'un tel dispositif, et en particulier sa reconfiguration ou son remplacement au sein du projecteur, restent faisables et garantis.

L'invention a pour objet un ensemble défini par la revendication indépendante 1 et un procédé de montage d'un premier dispositif de pilotage de l'alimentation électrique de l'ensemble défini par la revendication 8. Les détails de mis en œuvre sont définis par les revendications dépendantes.

L'invention a pour objet un ensemble comprenant un premier et un deuxième projecteur d'un véhicule automobile, le premier et deuxième projecteur comprenant respectivement des premières et deuxièmes sources lumineuses ainsi qu'un premier et deuxième dispositif de pilotage de l'alimentation électrique, destinés respectivement à fournir un courant d'intensité prédéterminée auxdites premières et deuxièmes sources lumineuses, l'ensemble comprenant :
o un premier élément de mémoire du premier dispositif de pilotage configuré pour :
   - enregistrer au sein du premier dispositif de pilotage des données relatives à l'intensité du courant électrique à fournir aux premières sources lumineuses ;
o un premier élément de mémoire du deuxième dispositif de pilotage configuré pour:
   - enregistrer au sein du deuxième dispositif de pilotage des données relatives à l'intensité du courant électrique à fournir aux deuxièmes sources lumineuses ;
o des moyens de réception de données du premier dispositif de pilotage configurés pour recevoir lesdites données d'un dispositif externe, et
o des moyens de traitement de données du premier dispositif de pilotage ayant :
   - au sein du premier dispositif de pilotage, un accès en écriture sur le premier élément de mémoire, configurés pour écrire des données reçues par les moyens de réception de données dans le premier élément de mémoire du premier dispositif de pilotage;
o des moyens de traitement de données du deuxième dispositif de pilotage ayant :
   au sein du deuxième dispositif de pilotage, un accès en écriture sur le premier élément de mémoire, configurés pour écrire des données reçues par les moyens de réception de données dans le premier élément de mémoire du deuxième dispositif de pilotage;
   dans lequel le premier dispositif de pilotage comprend en outre un deuxième élément de mémoire comprenant les données qui définissent l'intensité du courant électrique à fournir aux deuxièmes sources lumineuses, destinées à être alimentées par le deuxième dispositif de pilotage.

Chaque source lumineuse, en particulier du type diode à électroluminescence, présente des caractéristiques propres comme, par exemple, sa tension directe, son courant direct, son flux et sa couleur d'émission, qui définissent l'intensité du courant électrique à lui fournir pour obtenir un éclairage voulu.

De préférence, le premier dispositif de pilotage de l'ensemble peut comprendre des moyens de transmission de données configurés pour transmettre les données qui définissent l'intensité du courant électrique à fournir aux premières sources lumineuses, vers un dispositif externe. La transmission est de préférence réalisée moyennant un canal de transmission de données.

De préférence les moyens de traitement de données du premier dispositif de pilotage ont un accès en lecture sur le deuxième élément de mémoire.

Le dispositif externe peut de préférence être un autre dispositif de pilotage de l'ensemble.

Alternativement, le dispositif externe peut être une unité de contrôle centrale d'un véhicule automobile.

Le premier dispositif de pilotage de l'ensemble peut comprendre d'autres éléments de mémoire pour y enregistrer d'autres informations et paramètres relatifs à un dispositif externe.

De préférence, les moyens de réception de données du premier dispositif de pilotage et/ou les moyens de transmission de données du premier et deuxième dispositif de pilotage peuvent être aptes à recevoir et/ou transmettre des données sur un bus de communication de type CAN (« Controller Area Network ») ou LIN (« Local Interconnect Network ») d'un véhicule automobile.

Le premier dispositif de pilotage de l'ensemble peut de préférence être dépourvu de connexions filaires permettant la lecture directe de l'information BIN relative aux premières sources lumineuses.

Les sources lumineuses peuvent de préférence comprendre des éléments semi-conducteurs électroluminescents. Il peut préférentiellement s'agir de diodes électroluminescentes, LED, ou de diodes Laser.

Finalement, l'invention a également pour objet un procédé de montage d'un premier dispositif de pilotage de l'alimentation électrique de l'ensemble conforme à l'invention dans un premier projecteur d'un véhicule automobile. Le procédé est remarquable en ce qu'il comprend les étapes suivantes :
a) réception, à l'aide des moyens de réception de données du premier dispositif de pilotage, de premières données qui définissent l'intensité du courant électrique à fournir aux premières sources lumineuses, à partir d'un dispositif externe, les premières données étant des informations de type BIN relatives aux premières sources lumineuses;
b) écriture, à l'aide des moyens de traitement de données, des premières données reçues dans le premier élément de mémoire du premier dispositif de pilotage.
c) réception, à l'aide des moyens de réception de données du premier dispositif de pilotage, de deuxièmes données qui définissent l'intensité du courant électrique à fournir par un deuxième dispositif de pilotage à des deuxièmes sources lumineuses d'un deuxième projecteur, à partir d'un dispositif externe ;
d) écriture, à l'aide des moyens de traitement de données, des deuxièmes données reçues dans le deuxième élément de mémoire du premier dispositif de pilotage du premier projecteur.

De préférence, le procédé peut comprendre l'étape supplémentaire de e) transmission, à l'aide de moyens de transmission de données, des premières données stockées dans le premier élément de mémoire du premier dispositif de pilotage vers un dispositif externe.

Le dispositif externe peut de préférence être le deuxième dispositif de pilotage de l'alimentation électrique du deuxième projecteur, ou une unité de contrôle centrale du véhicule automobile.

En utilisant les mesures proposées par la présente invention, il devient possible de réduire le câblage entre un dispositif de pilotage de l'alimentation électrique de sources lumineuses d'un projecteur d'un véhicule automobile, tout en assurant la possibilité de remplacer le dispositif, et de configurer le dispositif de remplacement de manière à ce qu'il puisse fournir un courant électrique d'une intensité appropriée aux sources lumineuses du projecteur. Ceci est réalisé en enregistrant les valeurs de BIN utilisées par le dispositif de pilotage d'origine dans un dispositif externe. Le dispositif externe peut par exemple être un dispositif de pilotage d'un autre projecteur du même véhicule automobile. En sauvegardant ainsi une information de « backup », celle-ci devient récupérable même si le dispositif d'origine n'est plus accessible. Lors de l'installation d'un dispositif de remplacement, les valeurs de BIN, ou le cas échéant d'autres paramètres de configuration ou de diagnostic, sont récupérés automatiquement à partir du dispositif externe faisant office de sauvegarde backup. Le dispositif de pilotage de remplacement peut donc être configuré automatiquement pour devenir fonctionnellement une image conforme du dispositif remplacé.

D'autres caractéristiques et avantages de la présente invention seront mieux compris à l'aide de la description exemplaire et des dessins parmi lesquels :
- la figure 1 donne une illustration schématique d'un exemple de dispositif ;
- la figure 2 donne une illustration schématique d'un exemple de dispositif ;
- la figure 3 donne une illustration schématique d'une paire de dispositifs coopérants selon un mode de réalisation préféré de l'invention.

Sauf indication spécifique du contraire, des caractéristiques techniques décrites en détail pour un mode de réalisation donné peuvent être combinés aux caractéristiques techniques décrites dans le contexte d'autres modes de réalisation décrits à titre exemplaire et non limitatif. Des numéros de référence similaires seront utilisés pour décrire des concepts semblables à travers différents modes de réalisation de l'invention. Par exemple, les références, 110, 210 et 310 désignent un dispositif de pilotage de l'alimentation électrique de sources lumineuses selon deux exemples et un mode de réalisation décrits.

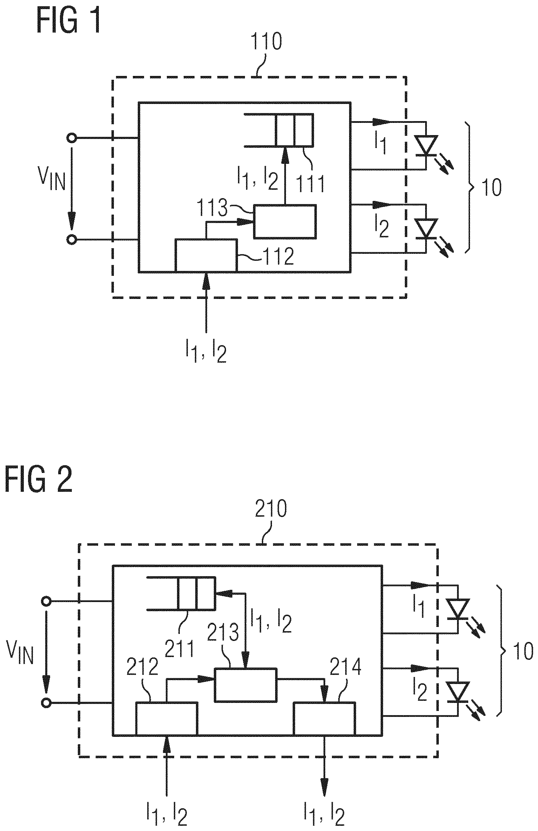

La figure 1 montre un exemple de dispositif 110 de pilotage de l'alimentation électrique de premières sources lumineuses 10 d'un projecteur pour véhicule automobile. A titre exemplaire, les sources lumineuses sont montrées comme étant des diodes électroluminescentes, LED. Par la nature des procédés de fabrication de tels éléments semi-conducteurs, le courant direct qui est à appliquer à l'une ou l'autre des LEDs afin qu'elles émettent un flux lumineux d'une intensité identique, peut être différent. C'est pourquoi la figure 1 montre deux LEDs alimentées par le dispositif 110 par des courants d'intensités différentes I₁ et I₂ respectivement. Evidemment le dispositif 110 peut fournir des courants d'autres intensités à d'autres multiples sources lumineuses. Le fonctionnement du dispositif 110 en tant que convertisseur électronique ne sera pas décrit en détails dans le cadre de la présente description. En effet, ce fonctionnement est connu dans l'art. Typiquement, un dispositif de pilotage 110 fait intervenir au moins un circuit convertisseur de type abaisseur de tension (buck), élévateur de tension (boost) ou par exemple de type SEPIC (« Single Ended Primary Inductor Converter), pour convertir une tension continue d'entrée V_{IN} fournie par une source interne d'un véhicule automobile en une tension de sortie différente. La tension de sortie est telle que l'intensité du courant électrique de charge passant par les LEDs incite celles-ci à émettre un flux lumineux d'une intensité prédéterminée.

Le dispositif 110 comprend des moyens de réception de données 112 adaptés pour recevoir des données sur un bus de communication d'un véhicule automobile. Il s'agit par exemple d'un bus de données de type CAN ou LIN. Alternativement les moyens de réception de données peuvent être agencés pour recevoir des données par voie de communication à champ proche, NFC. Le dispositif 110 peut en outre comprendre des moyens multiples de réception de données, adaptés à plusieurs modes et canaux de transmission de données. Le dispositif comprend en outre des moyens de traitement de données 113, réalisées par exemple par un élément microcontrôleur. Les moyens de traitement de données ont un accès en écriture sur un premier élément de mémoire 111. Le dispositif est configuré de manière à recevoir des données définissant les intensités de courant électriques I₁, I₂, que le dispositif doit fournir aux sources 10, et à les écrire dans l'élément de mémoire 111. Le circuit convertisseur (non-illustré) utilise les valeurs enregistrées dans l'élément de mémoire 111 pour fournir les courants d'intensités I1, I2 aux sources lumineuses 10.

Lors de l'assemblage d'un projecteur pour un véhicule automobile. Les valeurs qui indiquent les intensités de courant I₁, I₂ sont fournies par exemple par voie NFC, et correspondent de préférence aux valeurs de BIN des LEDs qui seront installées dans le même projecteur. Les moyens de traitement enregistrent les valeurs lues dans l'élément de mémoire 111 pour configurer le circuit convertisseur en accord.

Lors d'un remplacement d'un dispositif de pilotage dans un projecteur qui fonctionnait au préalable avec un dispositif de pilotage à remplacer, le dispositif de remplacement 110 reçoit les données I₁, I₂ d'un dispositif externe qui fait partie du même véhicule automobile, et qui fait office de mémoire backup.

La figure 2 montre un exemple de dispositif 210 de pilotage de l'alimentation électrique de premières sources lumineuses 10 d'un projecteur pour véhicule automobile. Le dispositif est similaire au dispositif 110 de la figure 1 et les mêmes commentaires s'y appliquent, avec les différences suivantes. Le dispositif 210 comprend des moyens de transmission de données 214 adaptés pour transmettre des données sur un bus de communication d'un véhicule automobile. Il s'agit par exemple d'un bus de données de type CAN ou LIN. Le dispositif 210 peut en outre comprendre des moyens multiples de transmission de données, adaptés à plusieurs modes et canaux de transmission de données. Les moyens de traitement de données 213 ont un accès en lecture sur le premier élément de mémoire 211. Le dispositif est en outre configuré de manière à transmettre les données définissant les intensités de courant électriques I₁, I₂, que le dispositif doit fournir aux sources 10 vers un dispositif externe qui fait partie du même véhicule automobile, et qui fait office de mémoire backup.

La transmission des données qui définissent les intensités de courant électriques I₁, I₂ vers un dispositif externe permet de constituer une copie de ces données au niveau du dispositif externe. Le dispositif peut par exemple être une unité de contrôle centrale au véhicule automobile, ou il peut s'agir de manière non-limitative d'un dispositif de pilotage de l'alimentation électrique de sources lumineuses d'un autre projecteur du véhicule automobile. Les données transmises peuvent comprendre des instructions qui amènent le dispositif externe récepteur des données, à enregistrer les valeurs qui représentent les intensités de courant I₁, I₂ dans un élément de mémoire. Lors d'un remplacement du dispositif de pilotage, les valeurs qui représentent les intensités I₁, I₂ peuvent alors être récupérées par le dispositif de pilotage de remplacement depuis le dispositif externe, comme cela a été décrit en rapport avec le dispositif de la figure 1. Ceci permet de configurer le dispositif de remplacement avec les valeurs adéquates I₁, I₂, adaptées aux sources lumineuses 10, sans pour autant avoir recours à un faisceau de connexion dédié à la lecture des informations de BIN sur le circuit imprimé qui abrite les sources 10.

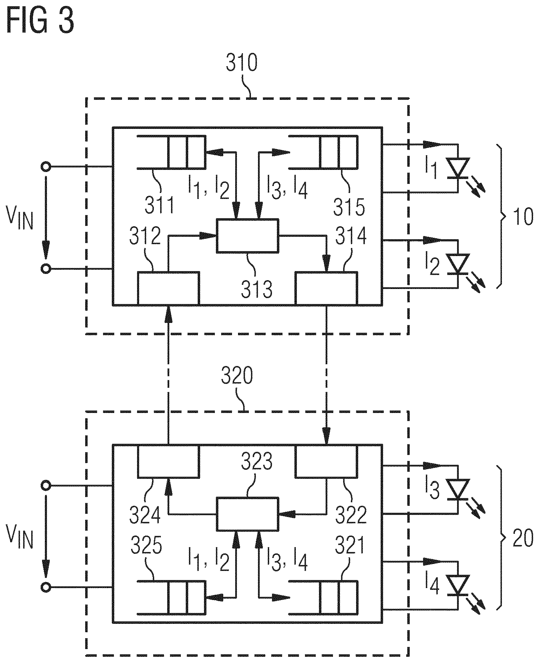

La figure 3 montre un premier dispositif 310 de pilotage de l'alimentation électrique de premières sources lumineuses 10 d'un premier projecteur pour véhicule automobile, selon un mode de réalisation. Un deuxième dispositif 320 de pilotage de l'alimentation électrique de deuxièmes sources lumineuses 20 d'un deuxième projecteur du même véhicule automobile est également montré. Le deuxième dispositif 320 est fonctionnellement et structurellement semblable au premier dispositif 310. Le dispositif 310 est en outre similaire au dispositif 210 de la figure 2 et les mêmes commentaires s'y appliquent, avec les différences suivantes. Le dispositif 310 comprend un deuxième élément de mémoire 315 pour y enregistrer des données qui définissent l'intensité du courant électrique I₃, I₄ à fournir aux deuxièmes sources lumineuses 20 alimentées par le deuxième dispositif 320.

En plus des caractéristiques décrites en rapport avec les dispositifs 110 et 210 des figures 1 et 2, les moyens de réception de données 312 sont configurés pour recevoir des données qui définissent les intensités de courant électrique I₃, I₄. Il s'agit par exemple des informations de BIN relatives aux LEDs 20. Les moyens de traitement de données 313 sont en outre configurés pour enregistrer les données reçues dans le deuxième élément de mémoire 315. En plus, les moyens de traitement 313 sont aptes à lire ces données dans le deuxième élément de mémoire 315, pour les transmettre à l'aide des moyens de transmission 314 vers un dispositif externe. Dans l'exemple montré, le deuxième dispositif 320 fait office de dispositif externe. Le fonctionnement du dispositif 310 sera décrit plus en détails. Le même fonctionnement s'applique vice-versa au dispositif 320.

Lors du montage du premier projecteur comprenant le dispositif 310 dans un véhicule automobile, ce dispositif comprend les valeurs appropriées I₁, I₂ à l'alimentation électrique des LEDs 10. Ces valeurs, ou des données représentatives de ces valeurs, sont stockées dans le premier élément de mémoire 311, comme cela a été décrit en rapport avec le dispositif de la figure 1.

Lors du montage du deuxième projecteur comprenant le dispositif 310 dans le véhicule automobile, ce dispositif comprend les valeurs appropriées I₃, I₄ à l'alimentation électrique des LEDs 20. Ces valeurs, ou des données représentatives de ces valeurs, sont stockées dans le premier élément de mémoire 321.

Une fois les deux projecteurs installés, le dispositif 310 reçoit, sur un bus LIN du véhicule automobile connectant les deux dispositifs 310 et 320 et à l'aide des moyens de réception de données 312, les données qui définissent les intensités de courant électrique I₃, I₄. Les moyens de traitement de données 313 enregistrent ces données dans le deuxième élément de mémoire 315 pour y constituer une mémoire backup des valeurs nécessaires pour configurer le deuxième dispositif de pilotage 320.

Soit en même temps, soit avant ou après ladite réception de données, le dispositif 310 transmet, sur le bus LIN, à l'aide des moyens de transmission de données 314, les données qui définissent les intensités de courant électrique I₁, I₂ vers le deuxième dispositif de pilotage 320, afin que celui-ci puisse y constituer une mémoire backup des valeurs nécessaires à la configuration du premier dispositif de pilotage 310. Le déroulement de ces étapes est automatique et défini par un programme exécuté par les moyens de traitement de données 313. A l'aide de la description fonctionnelle et structurelle qui vient d'être donnée, l'homme du métier sera capable d'implémenter un tel programme moyennant ses connaissances générales en informatique. Le dispositif 320 opère de la même façon envers le dispositif 310, en vice-versa.

Dès lors, lorsqu'un des deux dispositifs de pilotage 310, 320 est remplacé, les données nécessaires à sa configuration, qui permettent de fournir les intensités de courant électrique adéquates aux sources 10 respectivement 20, sont obtenues depuis l'autre dispositif, qui en contient une mémoire backup. Ceci permet de configurer le dispositif de remplacement avec les valeurs adéquates adaptées aux sources lumineuses qui équipent le projecteur en question, sans pour autant avoir recours à un faisceau de connexion dédié à la lecture des informations de BIN sur le circuit imprimé qui abrite ces sources.

Si un des projecteurs est remplacé, le projecteur de remplacement comprend un dispositif de pilotage de remplacement, qui est configuré pour fournir un courant électrique adapté aux sources lumineuses. Ces sources lumineuses sont également des sources lumineuses de remplacement. Dans ce cas, le dispositif de remplacement procède à constituer un nouveau backup comprenant les nouvelles valeurs de remplacement au niveau du dispositif externe. Si le dispositif externe est un dispositif d'un autre projecteur du véhicule automobile, celui-ci procède à constituer un nouveau backup de ses propres valeurs critiques au niveau du second élément de mémoire du dispositif de remplacement, conformément aux démarches décrites en rapport avec le mode de réalisation de la figure 3. Il va de soi que d'autres paramètres ou données de diagnostic relatives à un des deux dispositifs de pilotage peuvent être sauvegardés dans un élément de mémoire de l'autre des deux dispositifs en utilisant un protocole similaire et sans pour autant sortir du cadre de l'invention.

## Revendications

1. Ensemble comprenant un premier et un deuxième projecteur d'un véhicule automobile, le premier et deuxième projecteur comprenant respectivement des premières (10) et deuxièmes (20) sources lumineuses ainsi qu'un premier (310) et deuxième (320) dispositif de pilotage de l'alimentation électrique, destinés respectivement à fournir un courant d'intensité prédéterminée auxdites premières et deuxièmes sources lumineuses,
l'ensemble comprenant:
∘ un premier élément de mémoire (111, 211, 311) du premier dispositif de pilotage (310) configuré pour :
- enregistrer au sein du premier dispositif de pilotage (310) des données relatives à l'intensité du courant électrique à fournir aux premières sources lumineuses (10) ;
∘ un premier élément de mémoire (321) du deuxième dispositif de pilotage (320) configuré pour:
- enregistrer au sein du deuxième dispositif de pilotage (320) des données relatives à l'intensité du courant électrique à fournir aux deuxièmes sources lumineuses (20);
∘ des moyens de réception de données (112, 212, 312 ; 322) du premier dispositif de pilotage (310) configurés pour recevoir lesdites données d'un dispositif externe, et
∘ des moyens de traitement de données (113, 213, 313) du premier dispositif de pilotage (310) ayant:
- au sein du premier dispositif de pilotage (310), un accès en écriture sur le premier élément de mémoire (111, 211, 311), configurés pour écrire des données reçues par les moyens de réception de données dans le premier élément de mémoire ; du premier dispositif de pilotage (310);
∘ des moyens de traitement de données (323) du deuxième dispositif de pilotage (320) ayant :
- au sein du deuxième dispositif de pilotage (320), un accès en écriture sur le premier élément de mémoire (321), configurés pour écrire des données reçues par les moyens de réception de données dans le premier élément de mémoire du deuxième dispositif de pilotage (320) ;
**caractérisé en ce que** le premier dispositif de pilotage comprend en outre un deuxième élément de mémoire (315) comprenant les données qui définissent l'intensité du courant électrique à fournir aux deuxièmes sources lumineuses (20), destinées à être alimentées par le deuxième dispositif de pilotage (320).

2. Ensemble selon la revendication précédente, **caractérisé en ce que** le premier dispositif de pilotage (310) comprend des moyens de transmission de données (214, 314) configurés pour transmettre les données qui définissent l'intensité du courant électrique à fournir aux premières sources lumineuses (10), vers un dispositif externe.

3. Ensemble selon la revendication précédente, **caractérisé en ce que** ledit dispositif externe est une unité de contrôle centrale du véhicule automobile.

4. Ensemble selon l'une des revendications précédentes, **caractérisé en ce que** le premier dispositif de pilotage comprend des moyens de transmission de données (314) configurés pour transmettre les données qui définissent l'intensité du courant électrique à fournir aux deuxièmes sources lumineuses (20) vers le deuxième dispositif de pilotage (320).

5. Ensemble selon une des revendications précédentes, **caractérisé en ce que** les moyens de réception de données du premier dispositif de pilotage (310) et/ou les moyens de transmission de données du premier (310) et deuxième (320) dispositif de pilotage sont aptes à recevoir et/ou transmettre des données sur un bus de communication, notamment de type CAN ou LIN, d'un véhicule automobile.

6. Ensemble selon une des revendications précédentes, **caractérisé en ce qu'**il est dépourvu de connexions filaires permettant la lecture directe de l'information BIN relative aux premières sources lumineuses (10).

7. Ensemble selon une des revendications précédentes , **caractérisé en ce que** les sources lumineuses (10, 20) comprennent des éléments semi-conducteurs électroluminescents.

8. Procédé de montage d'un premier dispositif de pilotage de l'alimentation électrique de l'ensemble selon une des revendications 1 à 7 dans un premier projecteur d'un véhicule automobile, **caractérisé en ce que** le procédé comprend les étapes suivantes :
a) réception, à l'aide des moyens de réception de données du premier dispositif de pilotage, de premières données qui définissent l'intensité du courant électrique à fournir aux premières sources lumineuses du premier projecteur, à partir d'un dispositif externe, les premières données étant des informations de type BIN relatives aux premières sources lumineuses;
b) écriture, à l'aide des moyens de traitement de données, des premières données reçues dans le premier élément de mémoire du premier dispositif de pilotage.
c) réception, à l'aide des moyens de réception de données du premier dispositif de pilotage, de deuxièmes données qui définissent l'intensité du courant électrique à fournir par un deuxième dispositif de pilotage à des deuxièmes sources lumineuses d'un deuxième projecteur, à partir d'un dispositif externe ;
d) écriture, à l'aide des moyens de traitement de données, des deuxièmes données reçues dans le deuxième élément de mémoire du premier dispositif de pilotage.

9. Procédé selon la revendication précédente, **caractérisé en ce qu'**il comprend l'étape supplémentaire de
e) transmission, à l'aide de moyens de transmission de données, des premières données stockées dans le premier élément de mémoire du premier dispositif de pilotage vers un dispositif externe.

10. Procédé selon l'une des revendications 8 et 9, **caractérisé en ce que** le dispositif externe est le deuxième dispositif de pilotage de l'alimentation électrique du deuxième projecteur, ou une unité de contrôle centrale du véhicule automobile.

## Patentansprüche

1. Anordnung mit einem ersten und einem zweiten Scheinwerfer für ein Kraftfahrzeug, wobei der erste und der zweite Scheinwerfer eine erste (10) bzw. eine zweite (20) Lichtquelle und eine erste (310) bzw. eine zweite (320) Stromversorgungs-Steuervorrichtung aufweisen, die so ausgelegt sind, daß sie der ersten und der zweiten Lichtquelle einen Strom vorbestimmter Intensität zuführen,
die Anordnung aus :
∘ ein erstes Speicherelement (111, 211, 311) des ersten Steuervorrichtung (310), konfiguriert für :
- Aufzeichnung von Daten in der ersten Steuereinrichtung (310), die sich auf die Intensität des elektrischen Stroms beziehen, der den ersten Lichtquellen (10) zugeführt werden soll;
∘ ein erstes Speicherelement (321) des zweiten Treibers (320), konfiguriert für:
- Aufzeichnung innerhalb der zweiten Steuervorrichtung (320) von Daten, die sich auf die Intensität des elektrischen Stroms beziehen, der den zweiten Lichtquellen (20) zuzuführen ist;
∘ Datenempfangsmittel (112, 212, 312; 322) der ersten Steuervorrichtung (310), die konfiguriert sind, um die Daten von einer externen Vorrichtung zu empfangen, und
∘ Datenverarbeitungsmittel (113, 213, 313) der ersten Steuervorrichtung (310) mit :
- innerhalb des ersten Steuervorrichtung (310), Schreibzugriff auf das erste Speicherelement (111, 211, 311), das so konfiguriert ist, dass es von den Datenempfangsmitteln empfangene Daten in das erste Speicherelement des ersten Steuervorrichtung (310) schreibt;
∘ Datenverarbeitungsmittel (323) der zweiten Steuervorrichtung (320) mit:
- innerhalb der zweiten Antriebsvorrichtung (320), Schreibzugriff auf das erste Speicherelement (321), konfiguriert zum Schreiben von durch die Datenempfangseinrichtung empfangenen Daten in das erste Speicherelement der zweiten Antriebsvorrichtung (320);
**dadurch gekennzeichnet, dass** die erste Antriebsvorrichtung außerdem ein zweites Speicherelement (315) umfasst, das die Daten enthält, die die Intensität des elektrischen Stroms definieren, der den zweiten Lichtquellen (20) zuzuführen ist, die von der zweiten Antriebsvorrichtung (320) gespeist werden sollen.

2. Anordnung nach dem vorhergehenden Anspruch, **dadurch gekennzeichnet, dass** die erste Steuervorrichtung (310) Datenübertragungsmittel (214, 314) umfasst, die so konfiguriert sind, dass sie die Daten, die die Intensität des den ersten Lichtquellen (10) zu liefernden elektrischen Stroms definieren, an eine externe Vorrichtung übertragen.

3. Anordnung nach dem vorstehenden Anspruch, **dadurch gekennzeichnet, dass** die externe Vorrichtung eine zentrale Steuereinheit des Kraftfahrzeugs ist.

4. Anordnung nach dem vorstehenden Anspruch, **dadurch gekennzeichnet, dass** die erste Steuervorrichtung Datenübertragungsmittel (314) umfasst, die so konfiguriert sind, dass sie die Daten, die die Intensität des an die zweiten Lichtquellen (20) zu liefernden elektrischen Stroms definieren, an die zweite Steuervorrichtung (320) übertragen.

5. Anordnung nach einem der vorhergehenden Ansprüche, **dadurch gekennzeichnet, dass** die Mittel zum Empfangen und/oder Senden von Daten des ersten Steuergeräts (310) und/oder die Mittel zum Senden von Daten des ersten (310) und zweiten (320) Steuergeräts in der Lage sind, Daten auf einem Kommunikationsbus, insbesondere vom Typ CAN oder LIN, eines Kraftfahrzeugs zu empfangen und/oder zu senden.

6. Anordnung nach einem der vorhergehenden Ansprüche, **dadurch gekennzeichnet, dass** er frei von Drahtverbindungen ist, die ein direktes Lesen der BIN-Informationen bezüglich der ersten Lichtquellen (10) ermöglichen.

7. Anordnung nach einem der vorstehenden Ansprüche, **dadurch gekennzeichnet, dass** die Lichtquellen (10, 20) elektrolumineszierende Halbleiterelemente umfassen.

8. Verfahren zum Einbau einer ersten Vorrichtung zur Steuerung der Stromversorgung der Baugruppe nach einem der Ansprüche 1 bis 7 in einen ersten Scheinwerfer eines Kraftfahrzeugs, **dadurch gekennzeichnet, dass** das Verfahren die folgenden Schritte umfasst:
a) Empfang von ersten Daten, die die Intensität des elektrischen Stroms definieren, der den ersten Lichtquellen des ersten Projektors von einem externen Gerät zuzuführen ist, mit Hilfe der Datenempfangsmittel des ersten Steuergeräts, wobei die ersten Daten BIN-Informationen sind, die sich auf die ersten Lichtquellen beziehen;
(b) Schreiben der ersten empfangenen Daten mit Hilfe der Datenverarbeitungseinrichtung in das erste Speicherelement der ersten Steuervorrichtung.
c) mit Hilfe der Datenempfangsmittel der ersten Steuervorrichtung zweite Daten zu empfangen, die die Intensität des elektrischen Stroms definieren, der von einer zweiten Steuervorrichtung an zweite Lichtquellen eines zweiten Projektors von einer externen Vorrichtung geliefert werden soll ;
d) Schreiben der zweiten empfangenen Daten mit Hilfe der Datenverarbeitungseinrichtung in das zweite Speicherelement der ersten Steuereinrichtung.

9. Verfahren nach dem vorhergehenden Anspruch, **dadurch gekennzeichnet, dass** es den zusätzlichen Schritt umfasst
e) Übertragung der ersten im ersten Speicherelement des ersten Steuergeräts gespeicherten Daten mit Hilfe von Datenübertragungsmitteln an ein externes Gerät.

10. Verfahren nach einem der Ansprüche 8 und 9, **dadurch gekennzeichnet, dass** die externe Vorrichtung die zweite Vorrichtung zur Steuerung der Stromversorgung des zweiten Scheinwerfers oder eine zentrale Steuereinheit des Kraftfahrzeugsist.

## Claims

1. An assembly comprising first and second headlights for a motor vehicle, the first and second headlights respectively comprising first (10) and second (20) light sources and first (310) and second (320) power supply control devices respectively designed to supply a current of predetermined intensity to said first and second light sources, the assembly comprising :
∘ a first memory element (111, 211, 311) of the first control device (310) configured for :
- recording within the first control device (310) data relating to the intensity of the electric current to be supplied to the first light sources (10) ;
∘ a first memory element (321) of the second control device (320) configured for:
- recording within the second control device (320) data relating to the intensity of the electric current to be supplied to the second light sources (20);
∘ data receiving means (112, 212, 312; 322) of the first control device (310) configured to receive said data from an external device, and
∘ data processing means (113, 213, 313) of the first control device (310) having:
- within the first control device (310), write access to the first memory element (111, 211, 311), configured to write data received by the data receiving means into the first memory element of the first control device (310) ;
∘ data processing means (323) of the second control device (320) having :
- within the second control device (320), write access to the first memory element (321), configured to write data received by the data receiving means into the first memory element of the second control device (320) ;
**characterized in that** the first control device further comprises a second memory element (315) comprising the data defining the intensity of the electric current to be supplied to the second light sources (20), intended to be powered by the second control device (320).

2. An assembly according to the preceding claim, **characterised in that** the first control device (310) comprises data transmission means (214, 314) configured to transmit the data, which defines the intensity of the electric current to be supplied to the first light sources (10), to an external device.

3. An assembly according to the preceding claim, **characterized in that** said external device is a central control unit of the motor vehicle.

4. An assembly according to one of the preceding claims, **characterized in that** the first control device comprises data transmission means (314) configured to transmit data which define the intensity of the electric current to be supplied to the second light sources (20) to the second control device (320).

5. An assembly according to one of the preceding claims, **characterized in that** the means for receiving and/or transmitting data of the first control device (310) and/or the means for transmitting data of the first (310) and second (320) control device are capable of receiving and/or transmitting data on a communication bus, in particular of the CAN or LIN type, of a motor vehicle.

6. An assembly according to one of the preceding claims, **characterized in that** it is devoid of wire connections allowing direct reading of BIN information relating to the first light sources (10).

7. An assembly according to one of the preceding claims, **characterized in that** the light sources (10, 20) comprise electroluminescent semiconductor elements.

8. Method for mounting a first device for controlling the power supply of the assembly according to one of claims 1 to 7 in a first headlamp of a motor vehicle, **characterised in that** the method comprises the following steps:
a) receiving, by means of the data receiving means of the first control device, first data which define the intensity of the electric current to be supplied to the first light sources of the first projector, from an external device, the first data being BIN information relating to the first light sources;
(b) writing, by means of the data processing means, the first received data into the first memory element of the first control device;
c) receiving, with the aid of the data receiving means of the first control device, second data which define the intensity of the electric current to be supplied by a second control device to second light sources of a second projector from an external device ;
d) writing, by means of the data processing means, the second received data into the second memory element of the first control device.

9. Method according to the preceding claim, **characterized in that** it comprises the additional step of
e) transmission, by means of data transmission means, of the first data stored in the first memory element of the first control device to an external device.

10. Method according to one of claims 8 and 9, **characterized in that** the external device is the second device for controlling the power supply of the second headlamp, or a central control unit of the motor vehicle.
